# EUROPEAN PATENT APPLICATION

(11) **EP 1 850 250 A1**
(43) Date of publication of application: **31.10.2007**
(21) Application number: 07250463.2
(22) Date of filing: 05.02.2007
(51) Int. Cl.: G06F 17/30

(54) **Method and system for renewing an index**

(30) Priority: 27.04.2006 JP 2006123763
(71) Applicant: Hitachi, Ltd., Chiyoda-ku Tokyo 100-8220 (JP)
(72) Inventor: Inoue, Naoki c/o Hitachi Ltd., Intellectual Property Group, Tokyo 100-8220 (JP); Chadani, Kenichi c/o Hitachi Ltd., Intellectual Property Group, Tokyo 100-8220 (JP); Nakano, Yukio c/o Hitachi Ltd., Intellectual Property Group, Tokyo 100-8220 (JP)
(74) Representative: Calderbank, Thomas Roger

(57) **Abstract**

An index renewing system includes an temporary accumulation area (112) for storing registration target data and an identifier for the data, and an index storage area (110) for storing an index, wherein an operation unit (102) of the index renewing system stores received registration target data and the identifier for the data into the temporary accumulation area (112), creates an index entry by extracting a data item matching any of predetermined data items from the registration target data stored in the temporary accumulation data, and creating index information (index data) containing the identifier corresponding to the index entry, and stores the created index entry and the corresponding index information as an index into an index storage area (110) on an index entry by index entry basis.

## Description

This invention relates to methods for renewing an index for retrieval, and more particularly to a method and a system for renewing an index, which are preferably applied to renewal of a text index for full text search such that a document or text containing a specified character string is retrieved from a large amount of documents.

To quickly retrieve a document or text (subset of data) containing a specified search character string (data item) from a large-scale document database (set of data), systems using a text index, for which various methods are known in the art, have been generally adopted. Recorded in the text index are: one or more index entries each serving as a keyword for use in searching the document(s) for a specified character string; and index information (index data) associated with each index entry. The index information includes, for example, a text identifier for identifying the document, and a character position for locating at least one character string (data item) matching the specified character string in the document. Typically, the text index has been created in advance, and creation of the text index requires checking an entire set of data (all the documents).

When a document is additionally registered or a registered document is renewed or deleted, the text index should also be altered in accordance with the above alteration. If the process for altering the text index were designed to involve recreation of the entire text index for all the documents, the process would require to manipulate a very large amount of data. Therefore, in most instances, the process is designed to renew only a portion to which alteration is required. This is called renewal of a text index. In the process of renewing a text index, index information for each of the index entries to be renewed in the text index needs to be recorded on an index entry by index entry basis. This requires a large amount of disk I/O operations, which would disadvantageously impair (delay) the response in the processes of registration, renewal and deletion of the document database.

In order to eliminate this disadvantage, US2004/0006555A1 discloses a merge processing including method steps, which are to be performed when a text index is renewed, of: registering index entries into a small-scale full text index; and thereafter transferring the data to a large-scale full text index. According to US2004/0006555A1, taking advantage of the shorter time required for renewal of the small-scale full text index in comparison with the time required for renewal of the large-scale full text index, the use of the small-scale full text index for renewal operation may shorten the time required for the renewal. However, in the method disclosed in US2004/0006555A1, the size of the small-scale full text index is gradually increased by repetitive renewal processes. When the size of the small-scale full text index is increased, the time required to register index entries into the small-scale full text index is also increased. Therefore, periodic merge processing is indispensable to keep the advantage of using the small-scale full text index.

Furthermore, when the merge processing described in US2004/0006555A1 is executed asynchronously with the text retrieval, registration, renewal and deletion processes, the time required for registration, renewal and/or deletion of index entries is substantially equal to the time required to renew the small-scale full text index, and thus the response may be improved. However, in cases where the merge processing is executed in a single thread/single process environment, e.g., where the merge processing is linked to execution of an application, the merge processing should be executed at the same timing as the processes of registering, renewing and deleting a text are performed. In this case, in the merge processing described in US2004/0006555A1, all information in the small-scale full text index must be recorded into the large-scale full text index, and thus an appreciable amount of time is needed. Consequently, the delay in response of registration, renewal and deletion would disadvantageously become serious in some cases such that the merge processing described in US2004/0006555A1 is executed in a single thread/single process environment.

Illustrative, non-limiting embodiments of the present invention overcome the above disadvantages and other disadvantages not described above. Also, the present invention is not required to overcome the disadvantages described above, and an illustrative, non-limiting embodiment of the present invention may not overcome any of the problems described above.

It is an aspect of the present invention to provide means for suppressing the delay in the response even when renewal of a text index is executed in a single thread/single process environment such that the processing is linked to execution of an application.

In one aspect, the method consistent with the present invention is a method for renewing an index for use in retrieving a subset of data containing a specified data item from a set of data, comprising the steps, to be performed by an operation unit of an index renewing system, of: receiving registration target data; storing the received registration target data and an identifier for the received registration target data into a temporary accumulation area; creating one or more index entries by extracting a data item matching any of predetermined data items for retrieval from the registration target data stored in the temporary accumulation area (if at least one data item matching any of predetermined data items for retrieval is found in the registration target data stored in the temporary accumulation area, by extracting the at least one data item from the stored registration target data), and creating index data associated with each of the created one or more index entries, the index data comprising the identifier for the stored registration target data; and storing each pair of the created one or more index entries and the associated index data as an index into an index storage area on an index entry by index entry basis.

The above and other aspects, advantages and further features of the present invention will become more apparent by describing in detail illustrative, non-limiting embodiments thereof with reference to the accompanying drawings, in which:
FIG. 1 is a diagram showing the structure of a text retrieval system according to a first exemplary embodiment;
FIG. 2 is a diagram showing a main index of the first embodiment;
FIG. 3 is a diagram showing a type list of the first embodiment;
FIG. 4 is a diagram showing a temporary accumulation area according to the first embodiment;
FIG. 5 is a diagram showing a deletion list of the first embodiment;
FIG. 6 is a problem analysis diagram or PAD of a text registration program according to the first embodiment;
FIG. 7 is a PAD of an index reflecting program of the first embodiment;
FIG. 8 is a PAD of a reflection type determination program of the first embodiment;
FIG. 9 is a PAD of a main index reflecting program of the first embodiment;
FIG. 10 is a PAD of an index registration program of the first embodiment;
FIG. 11 is a diagram illustrating writing of data into the main index of the first embodiment;
FIG. 12 is an illustrative diagram showing a flow of information during the text registration process according to the first embodiment;
FIG. 13 is an illustrative diagram showing a flow of information during the text registration process according to the first embodiment;
FIG. 14 is an illustrative diagram showing a flow of information during the text registration process according to the first embodiment;
FIG. 15 is an illustrative diagram showing a flow of information during the text registration process according to the first embodiment;
FIG. 16 is a PAD of an index retrieval program according to the first embodiment;
FIG. 17 is a PAD of an index retrieval program according to a second exemplary embodiment;
FIG. 18 is a diagram showing a temporary accumulation area and a temporary reflection area according to a third embodiment;
FIG. 19 is a PAD of a main index reflecting program according to the third embodiment;
FIG. 20 is a diagram showing a type list according to a fourth embodiment; and
FIG. 21 is a diagram showing a type list according to a fifth embodiment.

Exemplary embodiments for carrying out the present invention (hereinafter referred to as embodiments) will be described in detail with reference to the accompanying drawings. In the embodiments described below, data as a target for which an index is created or renewed are text data in one or more documents; however, the target data to which the present invention is applicable is not limited to the text data, and various types of data may be applied as a target, as long as an index can be created therefor. For example, the present invention may be applied to an index for retrieving image data based upon color information contained in the image data when the image data is received as input data.

### [First Embodiment]

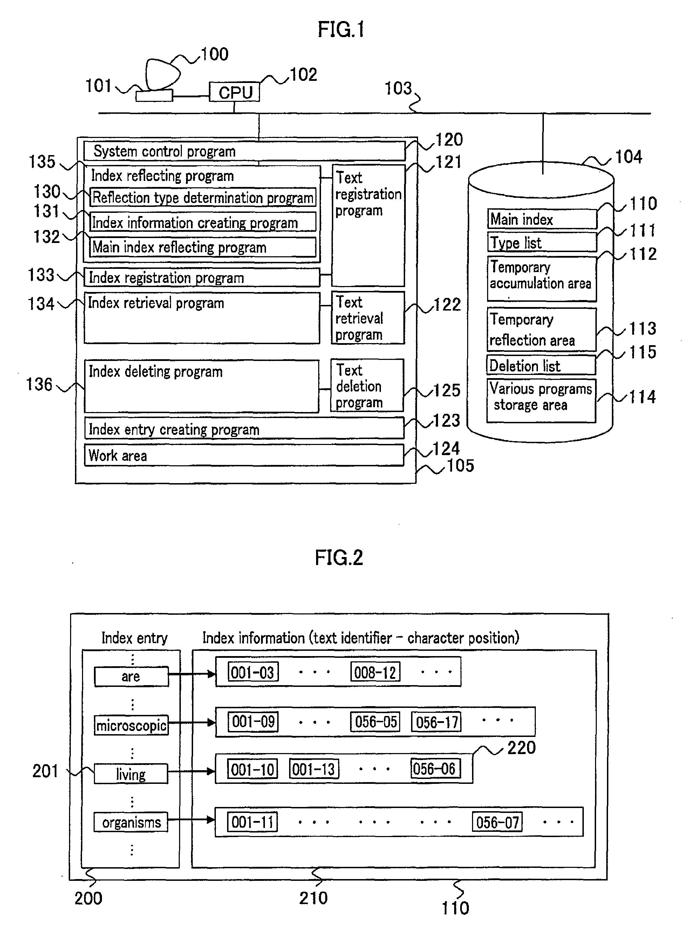

FIG. 1 is a diagram showing the structure of a text retrieval system according to a first embodiment of the present invention. The text retrieval system according to the first embodiment registers/deletes text data (or documents) input by a user into/from a main index 110, and also retrieves text data containing a character string input by a user from the registered text data (documents).

The text retrieval system of the present embodiment includes a display 100 for displaying a retrieval result, a keyboard 101 through which commands for registering and deleting text data and a command for retrieval are input, CPU (Central Processing Unit) 102 for executing registration processing, deletion processing and retrieval processing by executing programs described later, a main memory 105 for temporarily storing programs for registration and retrieval, input/output data, etc., and a secondary storage device 104 for storing data and programs, and a bus 103 for connecting these units.

CPU 102 corresponds to an operation unit in the appended claims.

In the main memory 105, a system control program 120 is loaded from the secondary storage device 104. Also loaded from the secondary storage device 104 in the main memory 105 are: a text registration program 121, an index reflecting program 135, a reflection type determination program 130, an index information creating program 131, a main index reflecting program 132 and an index registration program 133 (as programs for registration); and a text retrieval program 122 and an index retrieval program 134 (as programs for retrieval).

Furthermore, in the main memory 105, a text deletion program 125 and an index deletion program 136 as programs for deletion, and an index entry creation program 123 as a program used for each processing are loaded from the secondary storage device 104, and also, a work area 124 for temporarily storing data is allocated.

Furthermore, in the secondary storage device 104, its storage space is allocated to various areas such as a main index 110, a type list 111, a temporary accumulation area 112, a temporary reflection area 113, a deletion list 115 and a various program storage area 114.

Here, the main index 110 is the main body of a text index used for retrieval. The type list 111 is a list of index entry and reflection information used to identify each index entry as one which is to be written (reflected) into the main index 110. The temporary accumulation area 112 is an area used to temporarily store text data necessary for renewal before the index in the main index 110 is renewed. The temporary reflection area 113 is an area used to store original text data from which index entries are extracted for renewing the index in the main index 110. The deletion list 115 is used to record text identifiers for identifying text data of which index entry is (to be) deleted from the main index 110.

Next, information to be stored in each area in the secondary storage device 104 will be described in detail. Here, FIG. 2 is a diagram showing the main index 110. As shown in FIG. 2, the main index 110 includes an index entry 200 and index information (index data) 210 corresponding to the index entry 200.

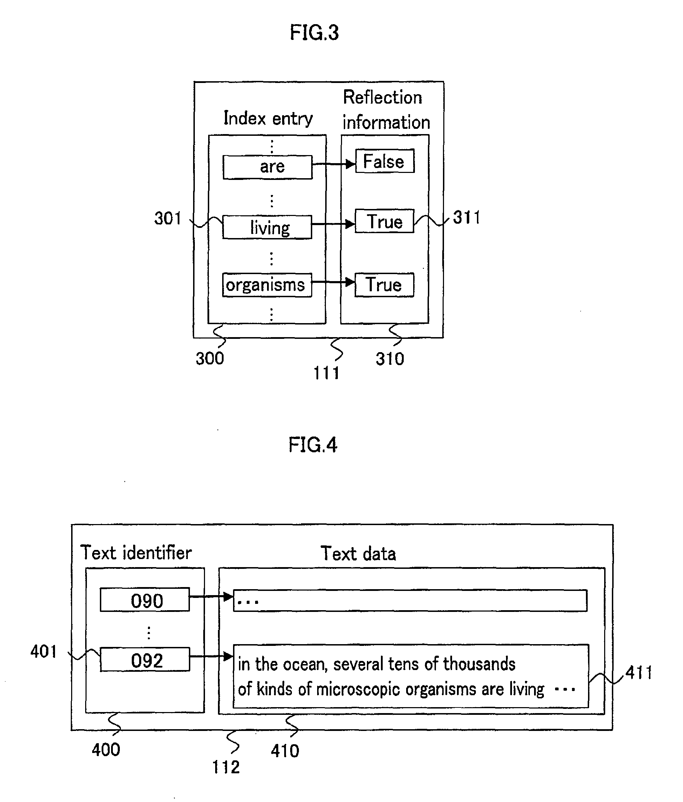

Next, FIG. 3 is a diagram showing the type list 111. As shown in FIG. 3, the type list 111 includes an index entry 300 and reflection information 310 corresponding to the index entry 300. The type list 111 is used to identify index entries which need to be stored (copied) from the temporary reflection area 113 into the main index 110.

FIG. 4 is a diagram showing the temporary accumulation area 112. As shown in FIG. 4, the temporary accumulation area 112 includes a text identifier 400 and text data 410 corresponding to the text identifier 400. The temporary accumulation area 112 is used to temporarily store text data to be registered (registration target data).

In the present embodiment, the temporary reflection area 113 has the same structure as the temporary accumulation area 112, and thus, the description thereof is omitted. The temporary reflection area 113 is used to temporarily store text data (registration target data) from which one or more index entries and associated index data are to be created and written into the main index 110.

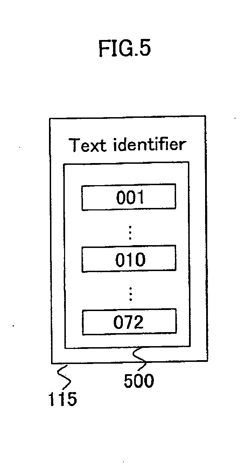

Next, FIG. 5 is a diagram showing the deletion list 115. As shown in FIG. 5, text identifiers 500 for text data are stored in the deletion list 115. The text identifier 500 is used to identify text data to be deleted from the main index 110, the temporary accumulation area 112 and/or the temporary reflection area 113.

Next, each of the programs stored (loaded) in the main memory 105 will be described. First, the system control program 120 controls the display 100 and the keyboard 101, allowing a user to input/output data or commands, and also controls execution of the other programs.

The text registration program 121 is invoked by the system control program 120, and executes the index reflecting program 135 and the index registration program 133 to register text data input by the user. The index reflecting program 135 is invoked by the text registration program 121, and renews the main index 110. In this processing, the reflection type determination program 130, the index information creating program 131 and the main index reflecting program 132 are invoked.

Here, the reflection type determination program 130, which is one of the programs invoked by the index reflecting program 135, uses the type list 111 to determine index entries to be written into the main index 110. Furthermore, the index information creating program 131 uses the temporary reflection area 113 to create index information to be written into the main index 110. Furthermore, the main index reflecting program 132 renews the main index 110 by using the index entries and the index information created by the reflection type determination program 130 and the index information creating program 131.

The index registration program 133 is invoked by the text registration program 121, and writes text data input by the user into the temporary accumulation area 112. When the temporary accumulation area 112 overflows, the index registration program 133 creates the type list 111, exchanges the temporary accumulation area 112 with the temporary reflection area 113 and deletes the content of the temporary accumulation area 112 (or moves information from the temporary accumulation area 112 to the temporary reflection area 113).

The text retrieval program 122, which is invoked by the system control program 120, invokes the index retrieval program 134 to retrieve text data as a retrieval target containing a search character string which are a series of characters input for retrieval by the user. The index retrieval program 134 is invoked by the text retrieval program 122, and retrieves text data as a retrieval target by using the main index 110, the temporary accumulation area 112, the temporary reflection area 113 and the deletion list 115.

The text deletion program 125 is invoked by the system control program 120, and deletes text data by using the index deletion program 136. The index deletion program 136 writes the text identifiers for the deletion target text data into the deletion list 115, thereby deleting the index entries of the deletion target text data from the main index 110.

The processing of creating various types of information to be stored in the secondary storage device 104 and the detailed operating processing of the programs loaded in the main memory 105 will be described later.

### (Text Registration Sequence)

Next, the text registration processing of the present embodiment will be described (as appropriate, *see* FIG. 2 to FIG. 5).

The system control program 120 which is invoked by a command input through the keyboard 101 of the text retrieval system shown in FIG. 1 invokes the text registration program 121, and starts the text registration processing.

Here, the text registration program 121 reads text data as a registration target input through the keyboard 101 and the text identifier corresponding to the text data, and renews the main index 110 based on the read (received) text data and text identifier.

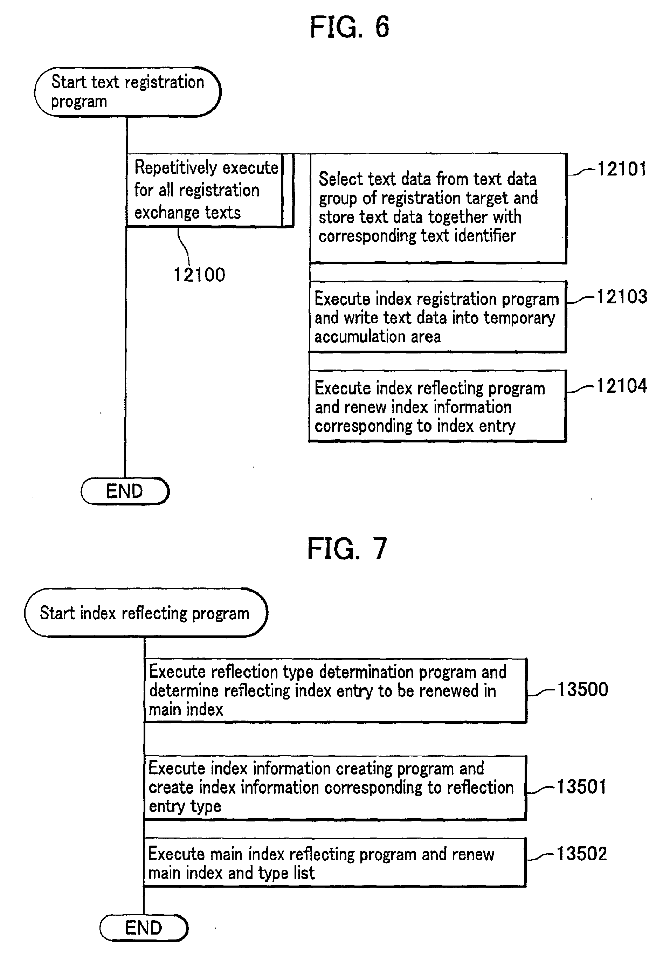

Here, FIG. 6 shows a PAD (Problem Analysis Diagram) indicating the process sequence of the text registration program 121 of the present embodiment. The process sequence of the text registration program 121 will be described with reference to FIG. 6.

First, the text registration program 121 repetitively executes a series of processings indicated by Steps 12101-12104 on text data of each registration target document (each set of registration target data) input from the keyboard 101, and text identifiers unique to the document or set of text data (Step 12100).

At this time, in Step 12101, one set of unprocessed text data is selected from the text data group of the registration target data input through the keyboard 101, and the selected set of text data and the text identifier corresponding to the set of text data are stored in the work area 124 on the main memory 105. Then, the text registration program 121 invokes the index registration program 133 in Step 12103. The index registration program 133 writes the registration target text data stored in the work area 124 into the temporary accumulation area 112 in the secondary storage device 104.

Next, in Step 12104, the text registration program 121 invokes the index reflecting program 135.

Here, the index reflecting program 135 selects zero, one or a plurality of index entries which are not yet written in the main index 110 among index entries corresponding to the text data stored in the temporary reflection area 113, reads the index entries 200 and the index information 210 in the main index 110, adds the selected index entries and the corresponding index information thereto, and writes the resulting pairs of index entries and index information into the main index 110, whereby the index information corresponding to each index entry is renewed and the processing of the text registration program 121 ends.

Next, the process sequence of the index reflecting program 135 and the index registration program 133 in the processing of Step 12103 and Step 12104 of FIG. 6 will be described in detail.

Here, FIG. 7 shows a PAD indicating the process sequence of the index reflecting program 135. The process sequence of the index reflecting program 135 will be described with reference to FIG. 7.

First, the index reflecting program 135 invokes the reflection type determination program 130 in Step 13500. The reflection type determination program 130 refers to the type list 111, the temporary accumulation area 112 and the temporary reflection area 113 in the secondary storage device 104 for the registration target text data stored in the work area 124 to determine the reflecting index entry types which are the types of index entries to be reflected in the main index 110 and are required to execute the processing of Step 13502, and stores the reflecting index entry types into the work area 124 of the main memory 105. Thereby, the reflecting index entry types (the types of index entries to be reflected in the main index 110) are selected.

Next, in Step 13501, the index reflecting program 135 invokes the index information creating program 131. The index information creating program 131 creates index information for all the index entries of the reflecting index entry types stored in the work area 124. By referring to the reflecting index entry types stored in the work area 124 and the temporary reflection area 113, it creates the index information corresponding to the reflecting index entry types which are required to execute the processing of Step 13502, and stores the created index information into the work area 124 of the main memory 105.

Finally, in Step 13502, the index reflecting program 135 invokes the main index reflecting program 132. The main index reflecting program 132 renews the main index 110 and the type list 111 in the secondary storage device 104 by using the reflecting index entry types and the index information corresponding to each reflecting index entry type. Through the above sequence, the processing of the index reflecting program 135 ends.

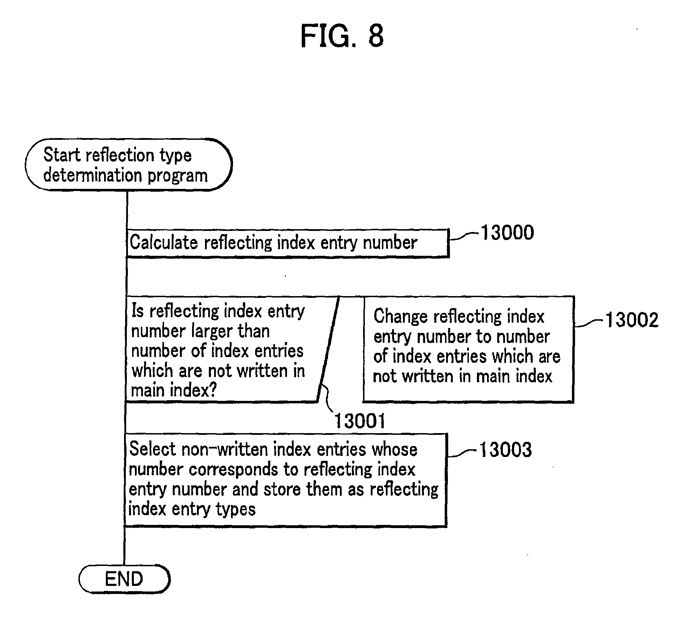

Next, the detailed process sequence of the reflection type determination program 130 executed in Step 13500 will be described. Here, FIG. 8 shows a PAD indicating the process sequence of the reflection type determination program.

First, in Step 13000, the reflection type determination program 130 calculates a reflecting index entry number, which is the number of index entries to be reflected in the main index 110, and stores the calculated number into the work area 124.

Here, the reflecting index entry number (the number of index entries to be stored into the main index 110; represented by C in the equation described later) is determined by using the amount of data storable (remaining area or available space) in the temporary accumulation area 112 (represented by N in the equation described later), the amount of text data which have been written in the temporary accumulation area 112 (represented by I in the equation described later), the amount of registration target text data (represented by n in the equation described later), the number of index entries in the type list 111 (represented by P in the equation described later), and the number of index entries which have been written (reflected) in the main index 110 in the type list 111 (represented by M in the equation described later).

For example, the reflecting index entry number is determined such that the reflection information of all the index entries 300 of the type list 111 becomes "True" (i.e., all index entries become reflected) at the point of time when no more registration target text data can be stored in the temporary accumulation area 112, such as C=↑P×(n÷N)↑, C=Max(↑P×((I+n)÷N)↑-M, 0), C=↑(P-M)×n÷(N-I)↑ where "↑↑" represents the minimum integer larger than or equal to the value of the equation therebetween.

Next, in Step 13001, the process determines whether the calculated reflecting index entry number is larger than the number of index entries 300 having "False" in reflection information 310 of the type list 111, which means that the corresponding index entry and index information have not been stored in the main index 110. That is, the process determines whether the reflecting index entry number is larger than the number of index entries which have not yet been stored in the main index 110.

Here, if the reflecting index entry number is larger than the number of index entries 300 having "False" in the reflection information 310 of the type list 111, Step 13002 is executed, and if it is not larger than the number of the index entries 300 having "False", Step 13002 is not executed, and the processing proceeds to Step 13003.

In this Step 13002, the reflecting index entry number is set to the number of indexes which are determined not to have been written in the main index 110 according to the reflection information 310 of the type list 111, whereby the reflecting index entry number is set so as not to be larger than the number of indexes whose reflection information 310 of the type list 111 is "False".

Finally, in Step 13003, the reflecting index entry number of index entries which have not been written are selected from the index entries 300 in the type list 111, the selected index entries are stored as the reflecting index entry types in the work area 124, and then the processing of the reflection type determination program 130 ends.

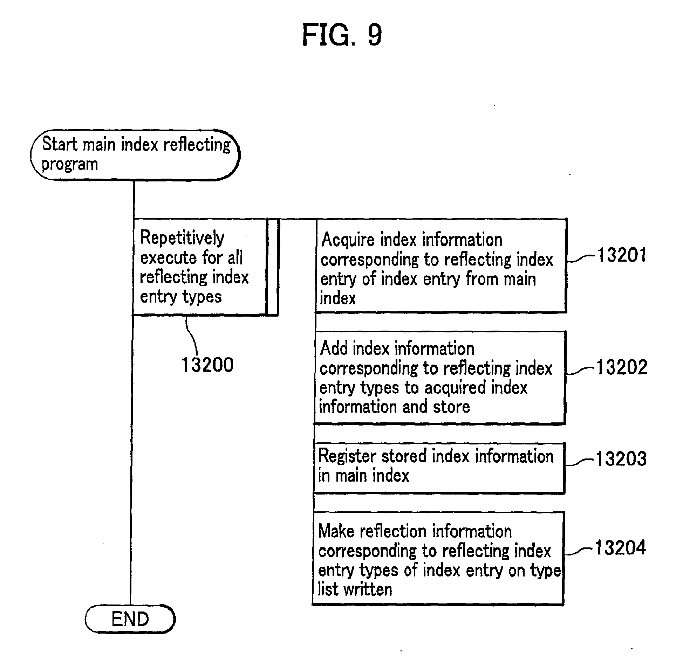

Next, the detailed process sequence of the main index reflecting program 132 invoked in Step 13500 of the index reflecting program 135 indicated in the PAD of FIG. 7 will be described. Here, FIG. 9 is a PAD showing the process sequence of the main index reflecting program 132.

First, the main index reflecting program 132 executes a series of processings indicated by Steps 13201-13204 repeatedly for all the reflecting index entry types in the work area 124 in Step 13200.

The processing from Step 13201 to Step 13204 will be described hereunder.

In Step 13201, index information 210 corresponding to the index entries of the reflecting index entry types in the index entry 200 in the main index 110 stored in the secondary storage device 104 is acquired, and stored into the work area 124. When the corresponding index entry does not exist in the main index 110, empty index information is stored into the work area 124.

In Step 13202, the index information corresponding to the reflecting index entry type created in Step 13501 (see FIG. 7) of the index reflecting program 135 is added to the index information stored in the work area 124 in Step 13201 and stored into the work area 124.

Next, in Step 13203, the index information in the work area 124 stored in Step 13202 is registered in the main index 110 in addition to the index information stored in Step 13201. However, when the corresponding index entry does not exist in the main index 110, a new index entry of the reflecting index entry type and the index information stored in the work area 124 associated with the new index entry are added to the main index 110.

Finally, in Step 13204, the reflection information 310 corresponding to the index entry of the reflecting index entry type in the type list 111 is changed to "True" which means that the index entry of the reflecting index entry type has been written in the main index 110, and the processing of the main index reflecting program 132 ends.

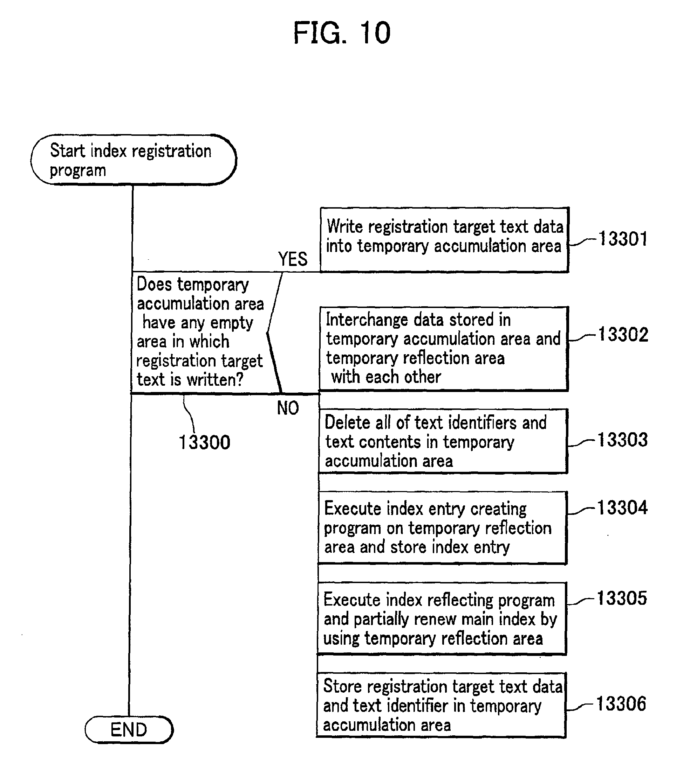

Next, the detailed process sequence of the index registration program 133 invoked in Step 12103 of the text registration program 121 indicated by the PAD of FIG. 6 will be described. Here, FIG. 10 shows a PAD indicating the process sequence of the index registration program 133.

First, the index registration program 133 determines in Step 13300 whether there is space enough to write the registration target text data in the work area 124, in the temporary accumulation area 112. Here, if there is enough space to write the registration target text data, Step 13301 is executed, and the registration target text data are written into the temporary accumulation area 112.

On the other hand, if there is not enough space to write the registration target text data in the temporary accumulation area 112, the program executes processing from Step 13302 to Step 13306.

The processing from Step 13302 to Step 13306 is described hereunder.

First, in Step 13302, the index registration program 133 interchanges the information stored in the temporary accumulation area 112 with the information stored in the temporary reflection area 113. Then, in Step 13303, all the text identifiers 400 and the text data 410 on the temporary accumulation area 112 are deleted. Alternatively, the information stored in the temporary accumulation area 112 may be moved to the temporary reflection area 113, so that the temporary accumulation area 112 becomes empty.

Next, in Step 13304, the information in the temporary reflection area 113 is stored in the work area 124, the index entry creating program 123 is executed to create index entries for the stored information, and the created index entries are stored in the work area 124. At this time, the index entry creating program 123 creates an index entry of a character string which is extracted from the text data stored in the work area 124 as a program execution target, and stores the created index entry into the work area 124. Furthermore, all the index entries stored in the work area 124, and the reflection information set to "False" indicating the state that each index entry is not yet written are recorded in the type list 111.

Next, in Step 13305, the index reflecting program 135 (see FIG. 7) is executed, and the main index 110 is partially renewed by using the temporary reflection area 113.

Finally, in Step 13306, the registration target text data and the text identifier in the work area 124 are written into the temporary accumulation area 112, and the processing of the index registration program 133 ends.

In the present embodiment, the two areas of the temporary accumulation area 112 and the temporary reflection area 113 are used as the temporary areas. However, at least one of the temporary accumulation area 112 and the temporary reflection area 113 may be divided into a plurality of parts to use three or more temporary areas. Furthermore, the temporary accumulation area 112 and the temporary reflection area 113 may be integrated into one area, and internally divided into logically different areas.

Furthermore, in the present embodiment, the index reflecting program 135 is executed every time when a set of text data is input. However, the index reflecting program 135 may be executed, after plural sets of text data are input.

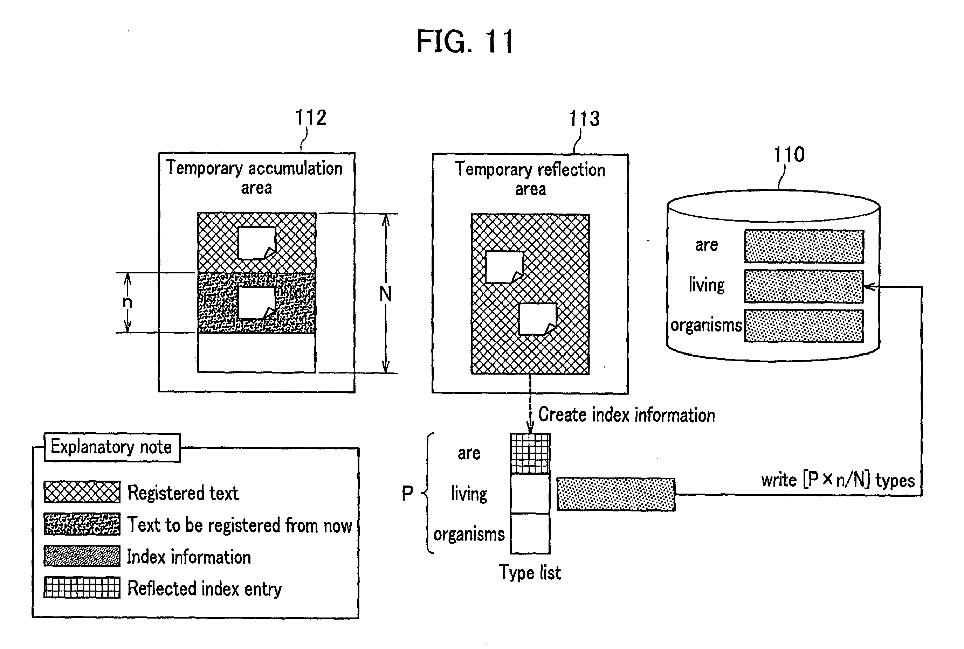

Next, FIG. 11 is a diagram showing the relationship of the text registration and the renewal of the main index 110 in the registration processing of the present embodiment. The flow of the information in the registration processing of the present embodiment will be described in detail with reference to FIG. 11.

In the diagram shown in FIG. 11, there are some texts already registered, and registered text data are stored in the temporary accumulation area 112 and the temporary reflection area 113. At this time, it is assumed that the text data amount storable in the temporary accumulation area 112 of the text retrieval system is set to N, and the number of the types of the index entries in the type list 111 corresponding to the text data registered in the temporary reflection area 113 are set to P.

Here, in the registration processing of the text data whose size is n, the number '↑P×(n÷N)↑', which is proportional to a ratio of the size n of the text data to be registered to the storable data amount N, of the index entries to be reflected are selected from the reflecting index entries, which are listed in the type list 111 but are not yet written in the main index 110. The diagram shown in FIG. 11 shows an example in which an index entry "living" is selected. Next, the index information of the selected index entry is created from the temporary reflection area 113, and written into the main index 110. In the present embodiment, it is shown that the index information of the index entry "living" is written. Finally, the text data to be registered is written into the temporary accumulation area 112.

As is apparent from this example, in the text registration process, the text data are written into the temporary accumulation area 112 on a text by text basis (for each set which is input at a time), and the index information is written for each reflecting index entry into the main index 110 (on an index entry by index entry basis).

The number of index information to be written into the main index 110 is set to such a value that the ratio of the index entries to be written in the main index 110 to the number of the reflecting index entries in the type list 111 is larger than or equal to the ratio of the size of the text data to be registered to the amount of text data storable into the temporary accumulation area 112.

The index information corresponding to all the reflecting index entries in the type list 111 can be written into the main index 110 by the time when the temporary accumulation area 112 is completely filled according to the method for determining the number of the index entries to be written. Furthermore, writing the index information corresponding to all the reflecting index entries in the type list 111 into the main index 110 is equivalent to writing the index information created from all the text data written in the temporary reflection area 113 into the main index 110. Accordingly, all the index information corresponding to the text data written in the temporary reflection area 113 can be written into the main index 110 by the time when the temporary accumulation area 112 is fully filled.

Accordingly, when the temporary accumulation area 112 is completely filled, the content of the temporary reflection area 113 can be deleted. Furthermore, the size of the temporary accumulation area 112 and the size of the temporary reflection area 113 can be fixed.

Next, the process sequence based on a specific example of the text registration process of the present embodiment will be described by using an example in which sets of text data such as "... living organisms are ...," "... are living in ...," "... are ...," "in the ocean, several tens of thousands of kinds of microscopic organisms ...," "terrestrial organisms are ..." are input in separate processing.

Here, in the process sequence of the specific example of the present embodiment, it is assumed that 1-gram index is used as an index. According to the 1-gram index, when a set of text data is registered, the text data are separated into words, and the text identifier and the character position information corresponding to the first or last character of the separated word are stored in connection with the separated word, thereby speeding up the full text retrieval of the text data.

In order to simplify the calculation, it is assumed that each set of text data to be registered consists of 20 words, the capacity of the temporary accumulation area 112 is set so that 1000 words can be registered, and the kinds of the words in all the texts to be registered are 100 kinds. Furthermore, 47 sets of text data are registered between the sets of text data containing "... are ..." and "in the ocean, several tens of thousands of kinds of microscopic organisms ..." inclusive. That is, by the time when "in the ocean, several tens of thousands of kinds of microscopic organisms ..." is registered, 50 sets of text data including the sets of data containing "... living organisms are ...," "... are living in ...," "... are ...," that is, text data totaling 1000 words are registered.

First, the registration processing carried out when a set of text data "... living organisms are ..." having a text identifier "061" is input will be described (appropriately, see FIG. 1 to FIG. 10). Before registration, the respective areas of the temporary accumulation area 112, the temporary reflection area 113 and the type list 111 of the text retrieval system shown in FIG. 1 are empty.

In this registration processing, the processing of the text registration program 121 shown in PAD of FIG. 6 is started. At this stage, the number of registration target sets of text data is equal to one, and thus the repetitive processing of Step 12100 in PAD of FIG. 6 is executed only for the set of text data "... living organisms are ..." as a target.

First, in Step 12101 of PAD shown in FIG. 6, the text data "... living organisms are ..." and the text identifier "061" are stored in the work area 124 on the main memory 105.

Next, the text registration program 121 invokes the index registration program 133 in Step 12103, whereby the processing from Step 13300 to Step 13306 indicated in PAD of the index registration program 133 of FIG. 10 is executed.

Finally, in Step 12104, the index reflecting program 135 is executed. In this case, no data exists in the temporary reflection area 113, and thus the index reflecting program 135 executes nothing.

The index registration program 133 will be described with reference to FIG. 10. First, in Step 13300, the process determines whether the temporary accumulation area 112 has space enough to store the registration target text data. In this case, there is enough space to store the registration target text data, and thus Step 13301 is executed.

In Step 13301, "... living organisms are ..." as the registration target text data and "061" as the text identifier are written in the temporary accumulation area 112 shown in FIG. 4. At this time, the index registration program 133 and the processing of Step 12103 of FIG. 6 end.

Described above is the process sequence carried out when "... living organisms are ..." is registered.

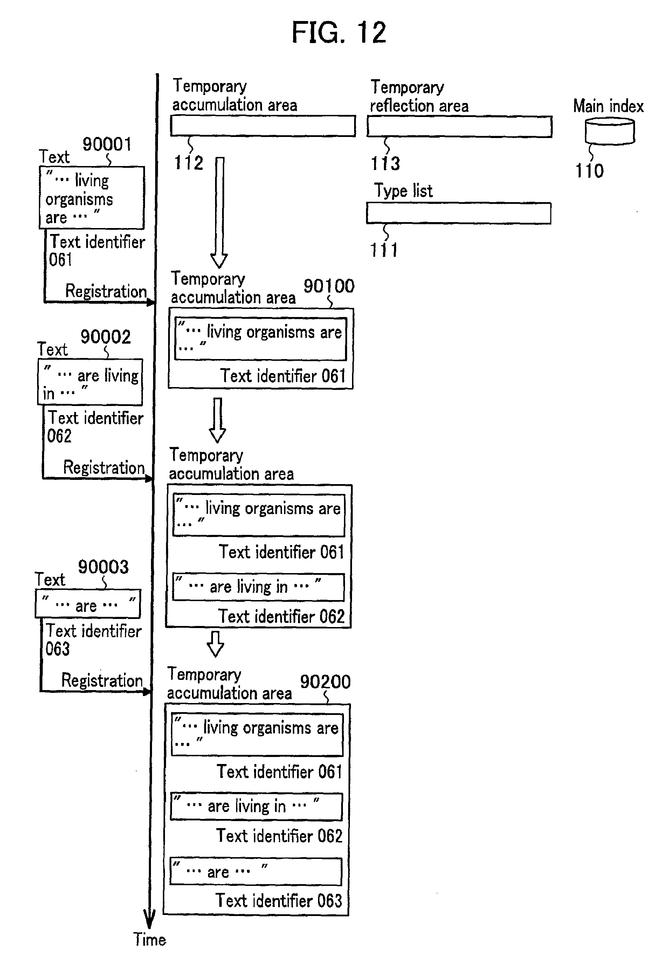

The above processing will be described by using the diagram showing the flow of the information during the text registration process shown in FIG. 12. The registration event 90001 of the text "... living organisms are ..." and the text identifier "061" occurs, and the text data of the text "... living organisms are ..." and the text identifier "061" are written into the temporary accumulation area 112, so that the temporary accumulation area is set as indicated by reference numeral 90100.

Next, the registration processings (90002, 90003) of "... are living in ..." and "... are ..." are executed as in the case of "... living organisms are ...." These processings are the same as the event 90001 and thus the details thereof are omitted. Accordingly, three sets of text data and the corresponding text identifiers are written in the temporary accumulation area 112, and the temporary accumulation area 112 is set as indicated by reference numeral 90200.

Likewise, 47 sets of text data are registered. Accordingly, text data of total 1000 words are registered in the temporary accumulation area 112.

Next, the process sequence of further registering a set of text data "in the ocean, several tens of thousands of kinds of microscopic organisms ..." under the state where the text data of 1000 words have already been stored in the temporary accumulation area 112 will be described.

In the registration of the text data "in the ocean, several tens of thousands of kinds of microscopic organisms ...," the processing from Step 12101 to Step 12103 is executed in Step 12100 of PAD of the text registration program 121 shown in FIG. 6 as in the case of the registration of the text data "... living organisms are ...." Here, the text identifier of "in the ocean, several tens of thousands of kinds of microscopic organisms ..." is "092."

In Step 12101, the registration target text data "in the ocean, several tens of thousands of kinds of microscopic organisms ..." and the text identifier "092" are stored in the work area 124 on the main memory 105.

In Step 12103, the index registration program 133 is executed. In this index registration program 133, the processing from Step 13300 to Step 13306 of PAD shown in FIG. 10 is executed.

Referring to FIG. 10, the process determines whether the temporary accumulation area 112 has enough space to write the registration target text data. Here, the size of the registration target text of "in the ocean, several tens of thousands of kinds of microscopic organisms ..." is equal to 20 characters, and the size of the available space in the temporary accumulation area 112 is equal to zero characters, and thus there is no space to write the registration target text data. Therefore, the processing from Step 13302 to Step 13306 is executed.

First, in Step 13302, the information stored in the temporary accumulation area 112 and the information stored in the temporary reflection area 113 are interchanged with each other. Accordingly, the text data of "... living organisms are ...," "... are living in ...," "... are ... ," etc., existing in the temporary accumulation area 112 and the text identifiers corresponding to these text data are moved to the temporary reflection area 113.

Next, in Step 13303, all the contents in the temporary accumulation area 112, that is, all the contents stored in the temporary reflection area 113 just before the present index registration program 133 is executed are deleted, whereby the temporary accumulation area 112 is empty.

In Step 13304, the index entry creating program 123 is executed for the content in the temporary reflection area 113, that is, the content stored in the temporary accumulation area 112 just before the present index registration program 133 is executed, thereby acquiring index entries, and the reflection information 310 for all the index entries 300 are set to "False" that indicates the corresponding index entry is not yet written and all the index entries and the reflection information are written into the type list 111. At this time, the text data "... are living in ..." and "... are ..." are stored in the temporary reflection area 113, and thus the index entries of the type list contain "of," "living," "organisms," "are" and "in," and all the index information corresponding to these index entries are set to "False" indicating that the index entry has not yet written.

Finally, in Step 13306, the text data "in the ocean, several tens of thousands of kinds of microscopic organisms ..." indicated by reference numeral 411 and the text identifier "092" indicated by reference numeral 401 are written into the temporary accumulation area 112 shown in FIG. 4, whereby Step 12103 of the text registration program 121 is finished.

Returning to FIG. 6, next, the text registration program 121 invokes the index reflecting program 135 in Step 12104. Here, the index reflecting program 135 executes the processing from Step 13500 to Step 13502 of PAD shown in FIG. 7.

The index reflecting program 135 first envokes the reflection type determination program 130 in Step 13500. The reflection type determination program 130 executes the processing from Step 13000 to Step 13003 of PAD shown in FIG. 8.

The reflection type determination program 130 first calculates the reflecting index entry number in Step 13000, and stores it into the work area 124. Here, when the above described 'C=↑P×(n÷N)↑' is used as the calculation equation, '2' is given as a calculation result of the reflecting index entry number.

In Step 13001, the reflecting index entry number is compared with the number of index entries which have not been written. Here, the reflecting index entry number is equal to '2,' and the number of index entries which have not been written is equal to '100,' so that Step 13002 is not executed.

Finally, in Step 13003, the reflecting index entry type is determined, and stored in the work area 124. In this case, "living" "organisms" are stored in the work area 124. Then, the processing of Step 13500 in PAD of FIG. 7 ends.

Next, returning to FIG. 7, the index information creating program 131 is executed in Step 13501 and the result is stored in the work area 124. The main index 110 is 1-gram index and thus the index information is represented by a pair of a text identifier and a character (word) position.

In Step 13502, the main index reflecting program 132 is executed. The main index reflecting program 132 executes the processing from Step 13200 to Step 13204 of PAD shown in FIG. 9. The Step 13200 of the main index reflecting program 132 is repeated for all the reflecting index entry types, and thus the processing from Step 13201 to Step 13204 is executed for each of "living" and "organisms".

First, in Step 13201 for the reflecting index entry type "living", the index information 220 which corresponds to the reflecting index entry type "living", i.e., the index entry designated by reference numeral 201 among the index entries shown in FIG. 2 on the main index 110 is stored in the work area 124.

In Step 13202, the index information of the reflecting index entry type "living" is created and added to the index information stored in the work area 124 in Step 13201.

Next, in Step 13203, the index information created in Step 13202 is written as the index information for the index entry "living" 201 of the main index 110 shown in FIG. 2, as indicated by reference numeral 220, whereby the index information corresponding to the index entry "living" on the main index 110 is renewed.

Finally, in Step 13204, the reflection information 310 represented by reference numeral 311 which corresponds to the index entry "living" indicated by reference numeral 301 on the type list 111 shown in FIG. 3 is set to "True" indicating that the corresponding index entry and index information have been written.

Likewise, the processing from Step 13201 to Step 13204 is executed for the reflecting index entry type "organisms". Then, the main index reflecting program 132, the processing of Step 13502 of PAD of FIG. 7 and the processing of Step 12104 of PAD of FIG. 6 end. Through these processings, a part of the main index 110 is renewed by using a part of the content of the temporary reflection area 113.

Described above is the process sequence carried out when the text "in the ocean, several tens of thousands of kinds of microscopic organisms ..." is registered.

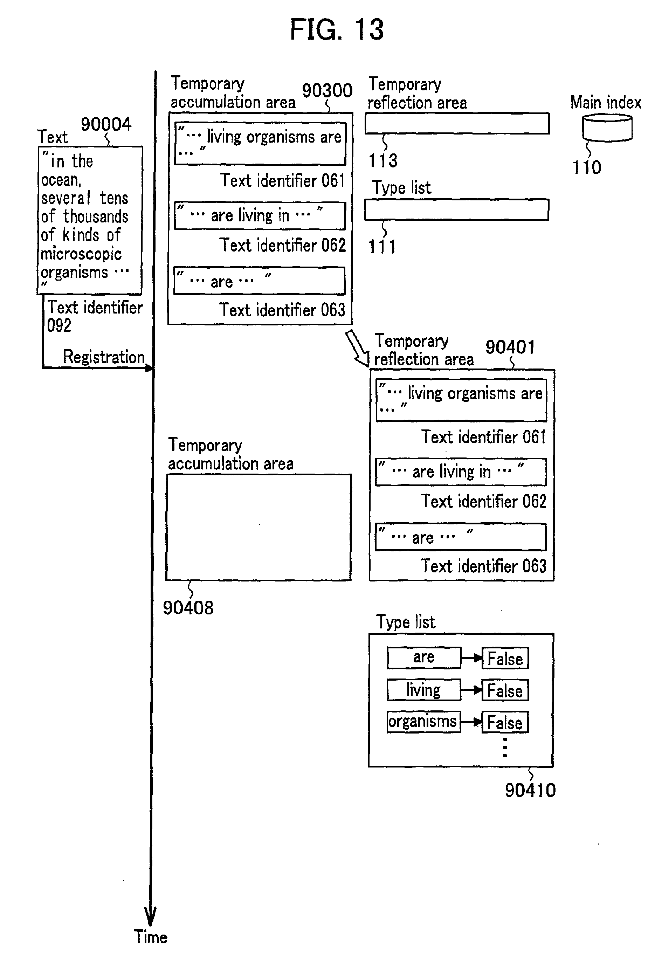

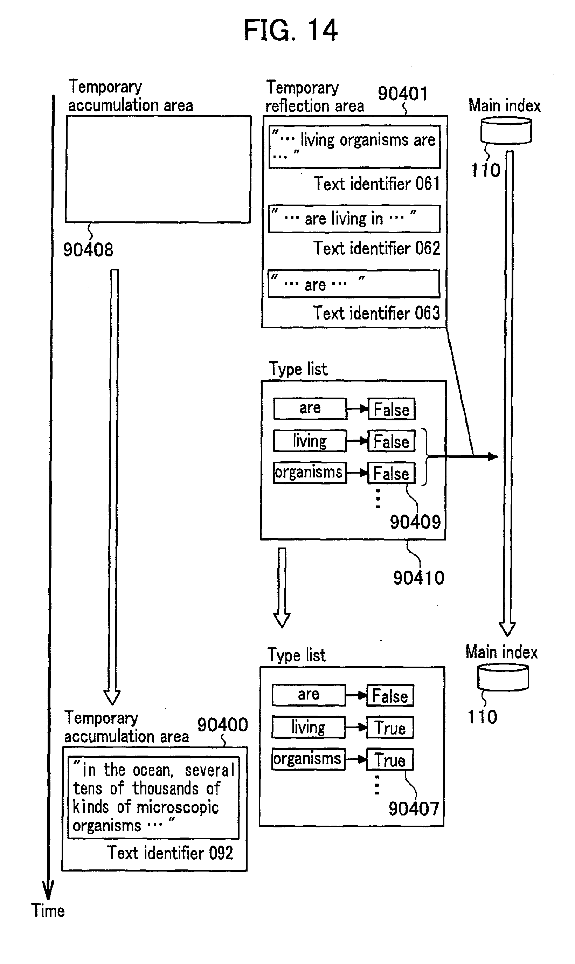

The above processing will be described by using the diagrams showing the flow of the information during the text registration process shown in FIG. 13 and FIG. 14. First, a registration event 90004 for the text data "in the ocean, several tens of thousands of kinds of microscopic organisms ..." occurs, and the temporary accumulation area 112 indicated by reference numeral 90300 has no available space enough to write the text "in the ocean, several tens of thousands of kinds of microscopic organisms ...," so that the information stored in the temporary accumulation area 112 is moved to the temporary reflection area 113, and the temporary accumulation area 112 and the temporary reflection area 113 are shifted to the states represented by reference numerals 90408 and 90401, respectively. Furthermore, at the same time, the type list 111 represented by reference numeral 90410 is created.

Next, referring to FIG. 14, the index information 220 including the text identifiers and the character positions corresponding to "living" and "organisms" is written into the main index 110 based on the text data in the temporary reflection area 113 represented by reference numeral 90401 and the type list 111 represented by reference numeral 90410. The reflection information 310 corresponding to the index entry 300 of the reflecting index entry type in the type list 111 is changed to "True" indicating that the corresponding index entry and index information have been written (from reference numeral 90409 to reference numeral 90407), and the text data "in the ocean, several tens of thousands of kinds of microscopic organisms ..." and the text identifier "092" are written into the temporary accumulation area 112 as indicated by reference numeral 90400.

Finally, a process where the text "terrestrial organisms are ..." is registered will be described. In the registration of the text "terrestrial organisms are ...," the processing from Step 12100 to Step 12104 of PAD of the text registration program 121 shown in FIG. 6 is executed. Here, the detailed process sequence is the same as the process where the text data "in the ocean, several tens of thousands of kinds of microscopic organisms ..." is registered, and thus the description thereof is omitted.

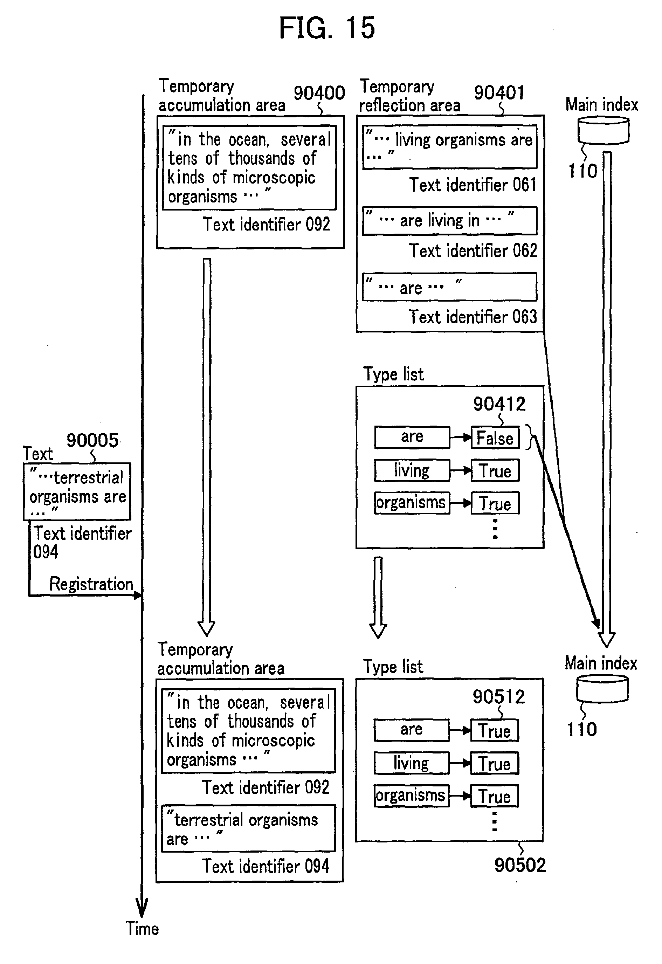

Next, the processing of registering the text "terrestrial organisms are ..." will be briefly described by using the diagram showing the flow of the information during the text registration process shown in FIG. 15.

First, the registration event 90005 for the text data "terrestrial organisms are ..." occurs, and the index information including the text identifier and the character (word) position is written into the main index 110 by using the temporary reflection area 113 indicated by reference numeral 904 and the type list 111. The reflection information corresponding to the index entry of the reflecting index entry type in the type list 111 which has been written in the main index 110 is rewritten to "True" indicating that the index entry and the index information have been written in the main index 110 (from reference numeral 90412 to reference numeral 90512) and the text data "terrestrial organisms are ..." and the text identifier "094" are written into the temporary accumulation area 112.

The foregoing is the flow of the registration processing of the text "terrestrial organisms are ... ".

As described above, the index information corresponding to the index entries in the type list 111 is written into the main index 110 from the temporary reflection area 113 so that the ratio of the number of index entries of the reflecting index entry types in the type list 111 which have been written in the main index 110 to the number of index entries of the reflecting index entry types in the type list 111 is kept larger than the ratio of the total amount of the text data which have been written in the temporary accumulation area 112 to the available space in the temporary accumulation area 112 until the time when the temporary accumulation area 112 is completely filled. Accordingly, the process of renewing the main index 110 based on the temporary reflection area 113 can be divided into a plurality of processes of text data registration, and the time to register the text data can be shortened. Furthermore, since the amount of the text data to be written is proportional to the ratio of the text data which have been written in the temporary accumulation area 112 to the available space of the temporary accumulation area 112, all the information in the temporary reflection area 113 can be completely written before the temporary accumulation area 112 is completely filled.

### (Sequence of Text Retrieval)

Next, the processing of the text retrieval according to the present embodiment will be described with reference to FIG. 1.

In the text retrieval process, the text retrieval program 122 is executed. In the text retrieval program 122, a search character string input through the keyboard 101 is stored in the work area 124, the index retrieval program 134 is executed for the stored search character string to acquire a text identifier as an execution result of the index retrieval program 134, and the text identifier is output to the display 100.

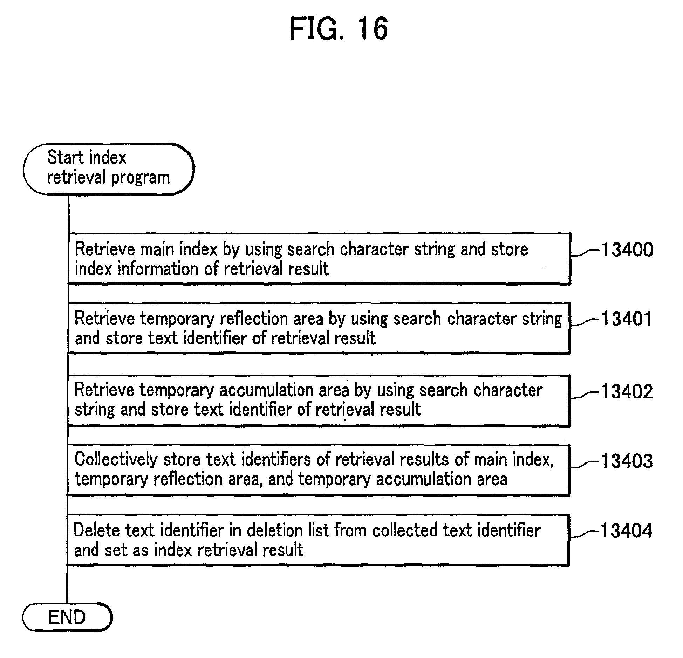

Next, the process sequence of the index retrieval program 134 will be described in detail. Here, in FIG. 16, the process sequence of the index retrieval program 134 is indicated by a PAD. In the index retrieval program 134, the registered main index 110 is searched for the search character string, and the corresponding text identifiers as a retrieval result are returned.

First, in Step 13400, the main index 110 is searched for the search character string stored in the work area 124. When the search character string is found in the main index 110, the corresponding index information as the retrieval result is retrieved from the main index 110 and stored into the work area 124.

Then, in Step 13401, the temporary reflection area 113 is searched for the search character string stored in the work area 124. When the search character string is found in the text data stored in the temporary reflection area 113, and the corresponding text identifiers as a retrieval result are retrieved from the temporary reflection area 113 and stored into the work area 124.

In Step 13402, the temporary accumulation area 112 is searched for the search character string stored in the work area 124. When the search character string is found in the text data stored in the temporary accumulation area 112, the corresponding text identifiers as a retrieval result are retrieved from the temporary accumulation area 112 and stored into the work area 124.

Next, in Step 13403, all the retrieval results from Step 13400 to Step 13402 are collected. If there are duplicate text identifiers, they are merged into one, and the retrieval results are stored into the work area 124.

Finally, in Step 13404, the text identifiers in the deletion list 115 are deleted from the text identifiers of the retrieval results stored in the work area 124 in Step 13404, and the result is stored into the work area 124. The text identifiers stored in Step 13404 are returned as the processing result of the index retrieval program 134, and then the processing of the index retrieval program 134 ends.

### (Text Deleting Sequence)

Next, the processing of deleting a text according to the present embodiment will be briefly described with reference to FIG. 1.

In the present embodiment, the text deletion program 125 is executed in the text deletion process. The text deletion program 125 deletes the text data by using the index deleting program 136. This index deleting program 136 deletes the index entry corresponding to a deletion target text identifier from the main index 110 by writing the deletion target text identifier into the deletion list 115, and deletes the text data corresponding to the deletion target text identifier from the temporary accumulation area 112 or the temporary reflection area 113.

Described above is the text deleting processing.

### (Advantageous Effects of the First Embodiment)

In the present embodiment, there is an effect that the worst time of the response is short in the renewal processing of the main index 110 which is particularly directly linked to an application and requires the processing by the time when the processing is returned to the application.

No dependency in writing into the main index 110 exists between the index entries, and thus necessary exclusive processing can be reduced and the simultaneous execution number can be increased even in a multi-thread or background environment.

When the present embodiment is applied to an environment that a transaction such as of a database or the like is used, particularly when the processing of writing a committed text into the main index 110 on an index entry by index entry basis afterwards is executed, the amount of rollback required can be reduced even when an error occurs during renewal.

When the present embodiment is applied to an environment using a transaction, at the time when the transaction is started, a temporary area dedicated to the transaction may be provided additionally to the temporary accumulation area 112, and the uncommitted text may be held in the temporary area dedicated to the transaction and written into the temporary accumulation area 112 when it is committed.

Furthermore, in the present embodiment, when rollback is carried out when an error occurs, the amount of log required for the rollback can be reduced.

According to the present embodiment, the target text can be acquired as a retrieval result immediately after the text is registered, and thus the present embodiment is applicable to even a case where immediate or frequent renewal is required.

Furthermore, in the present embodiment, the size of the temporary accumulation area 112 and the size of the temporary reflection area 113 can be fixed to predetermined sizes. Furthermore, the maximum size of the type list 111 is determined in advance, and thus a necessary area size can be determined on the secondary storage device 104 in advance in addition to the main index 110 and the deletion list 115. Therefore, according to the present embodiment, there is an effect that a necessary area to use an index can be easily estimated in advance.

Furthermore, since it is easy to estimate the necessary area, the type list 111, the temporary accumulation area 112 and the temporary reflection area 113 can be easily stored in other storage areas or made in dedicated hardware.

### [Second Embodiment]

An implementation where the index reflecting program 135 is executed at a time other than the time when the text data registration is performed will be described as a second embodiment for carrying out the present invention.

In the present embodiment, the index reflecting program 135 shown in FIG. 1 is also executed during the text retrieval process, whereby the response of the registration processing can be enhanced. In order to execute the index reflecting program 135 during operations other than registration, the index reflecting program 135 does not use the input text data, but only use the text data which have already been registered in the text retrieval system.

In the present embodiment, the structure of the text retrieval system which will not be duplicately described below is the same as the text retrieval system of the first embodiment. The single text registration processing and text deletion processing are the same as described in the first embodiment, and the description thereof is omitted.

### (Text Retrieval Sequence)

The index retrieval program 134 of the present embodiment retrieves target text data by using the main index 110, the temporary accumulation area 112, the temporary reflection area 113 and the deletion list 115, and further writes a part of the text data in the temporary reflection area 113 into the main index 110.

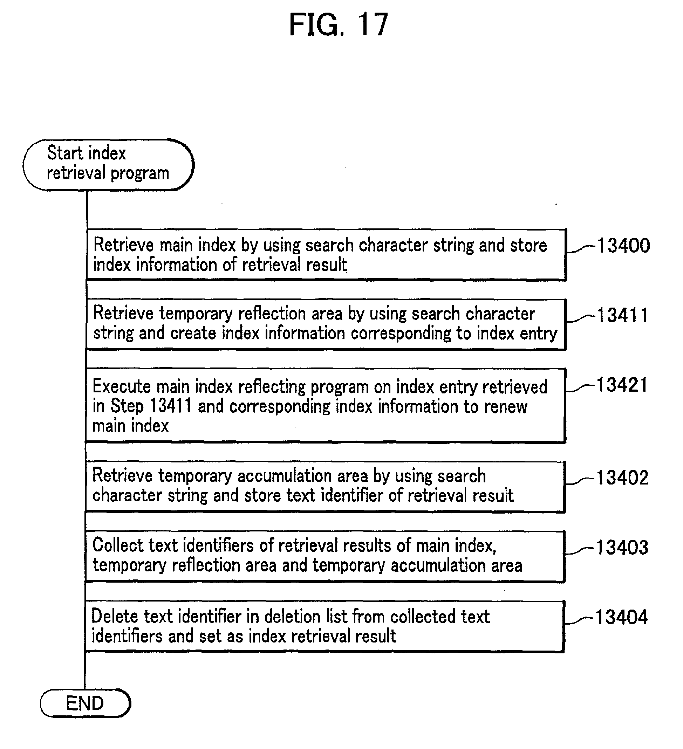

Here, FIG. 17 is a PAD showing the process sequence of the index retrieval program 134 of the present embodiment. The text retrieval sequence of the present embodiment will be described with reference to the process sequence of the index retrieval program 134 shown in PAD of FIG. 17 (as appropriate, see FIG. 1 to FIG. 5).

First, in Step 13400, the main index 110 is searched for a search character string stored in the work area 124. When the search character string is found in the text data stored in the main index 110, the corresponding index information 210 as a retrieval result is retrieved from the main index 110 and stored into the work area 124.

Then, in Step 13411, the temporary reflection area 113 is searched, and at the same time the index information corresponding to the index entry which matches the search character string is created by executing the index information creating program 131.

Next, in Step 13421, the main index reflecting program 132 is executed for the index entry retrieved in Step 13411 and creates the index information for the index entry to renew the main index 110. By executing the above processing, the index information 210 of the main index 110 which corresponds to the index entry used in the retrieval processing can be renewed.

The same processing from Step 13402 to Step 13404 of the index retrieval program 134 of the first embodiment shown in PAD of FIG. 16 is executed, and the retrieval result is output.

Described above is the processing of the index retrieval program 134.

### (Advantageous Effects of the Second Embodiment)

According to the present embodiment, a part of the writing processing into the main index 110 which is required for renewal is executed during the retrieval process; therefore, by slightly increasing the time required for the retrieval processing, the renewal time and response of the renewal processing can be greatly shortened.

Furthermore, by executing the index reflecting program 135 during the text retrieval process, particularly in the full text retrieval index which is directly linked to an application and can be processed only on the extension of the processing of the application, invocations inevitable from the application can be reduced, and consideration related to the renewal of the full text retrieval index can be eliminated from the application side.

Furthermore, the index entry and the index information corresponding to the search character string are used to renew the main index 110, whereby the subsequent retrieval can be speeded up.

Furthermore, the renewal of the index entries to the main index 110 which is executed only on the extension of the registration processing in the first embodiment can also be carried out at the time of retrieval process, and thus the response during the registration process can be improved. Furthermore, the frequently used index information can be written into the main index 110 at an earlier stage, and thus the retrieval speed can be increased.

In the present embodiment, all the index entries that have not been written among the index entries used during the retrieval process are renewed. However, the number of index entries to be written may be limited. Furthermore, in the present embodiment, simultaneously with the retrieval of the temporary reflection area 113, the index information corresponding to the index entry matching the search character string is created by executing the index information creating program 131. However, the creation of the index information may be performed by using the index entry of any text data stored in the temporary reflection area 113 or the temporary accumulation area 112.

### [Third Embodiment]

An embodiment in which index information is deleted from the main index 110 in the deletion processing will be described in detail as a third embodiment for carrying out the present invention.

In the present embodiment, the deletion list 115 is not provided on the secondary storage device 104 in the text retrieval system shown in FIG. 1. Furthermore, the structures of the temporary accumulation area 112 and temporary reflection area 113 are different, and the processings of the index registration program 133, the main index reflecting program 132, the text deletion program 125 and the index deleting program 136 are partially modified.

Other structure is the same as the text retrieval system of the first embodiment, and the description thereof is omitted.

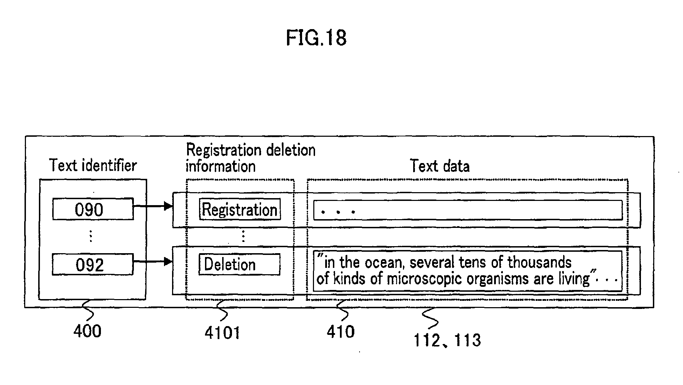

Here, FIG. 18 shows the structures of the temporary accumulation area 112 and the temporary reflection area 113 of the present embodiment. The temporary accumulation area 112 and the temporary reflection area 113 are structured so as to store registration deletion information 4101 holding information indicating which one of processes, registration or deletion, is carried out for the text identifier 400, and the text data 410.

Furthermore, the index registration program 133 of the present embodiment writes text data as a registration target into the temporary accumulation area 112, and the main index reflecting program 132 carries out addition/deletion to/from the main index 110 on the basis of the index entry and the index information created in the reflection type determination program 130 and the index information creating program 131 and information indicating whether the target is to be registered or deleted.

Alternatively, the index deleting program 136 writes text data as a deletion target into the temporary accumulation area 112, and carries out addition/deletion to/from the main index 110 by using the index reflecting program 135.

Part of the processings of the program which are different from the first embodiment in the present embodiment will be described hereunder.

In the text deletion processing, the system control program 120 first starts the text deletion program 125 by a deletion command input through the keyboard 101. In the text deletion program 125, the deletion target text data input through the keyboard 101 and the text identifier are stored in the work area 124. Here, the association between the text data and the text identifier is the same as in the registration processing. Next, the index deleting program 136 is executed, and the index entry and the index information are deleted from the main index 110. Described above is the processing of the text deletion program 125 of the present embodiment.

Next, in the index registration program 133 of the present embodiment, in the processing of registration into the temporary accumulation area 112 in Step 13301 and Step 13306 of the index registration program 133 of the first embodiment shown in PAD of FIG. 10, the registration target text identifier, the registration deletion information 4101 indicating that the information is the information "registered" in the registration processing, and the registration target text data are written together.

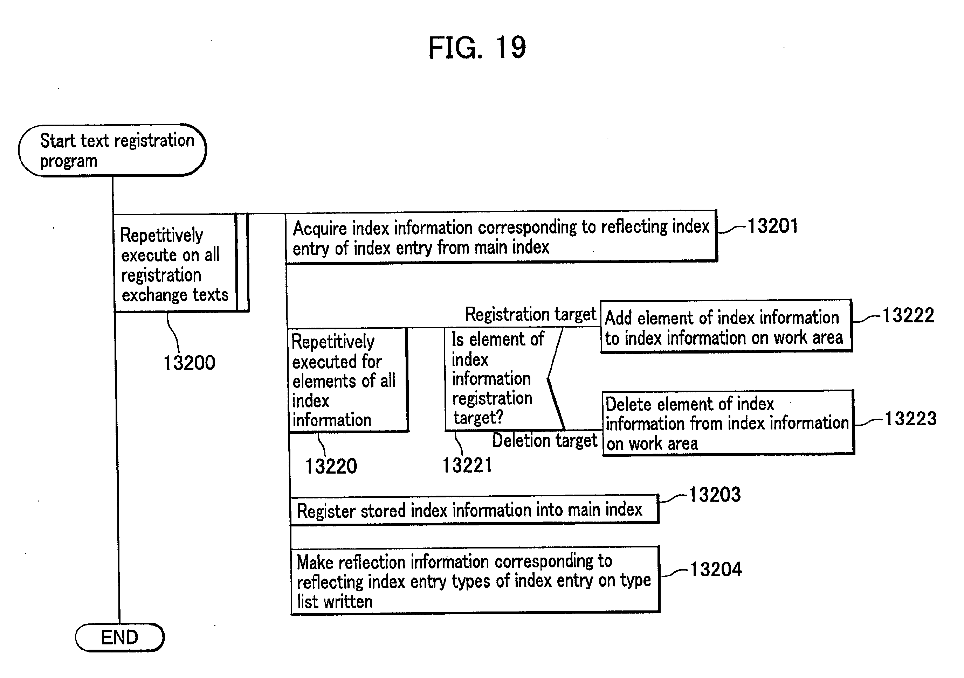

FIG. 19 shows PAD indicating the process sequence of the main index reflecting program 132 of the present embodiment. The process sequence of the main index reflecting program 132 shown in PAD of FIG. 19 will be described.

First, in Step 13201, the index information 210 corresponding to the index entry 200 of the reflecting index entry type found in the main index 110 on the secondary storage device 104 is acquired, and stored into the work area 124.

Next, in Step 13220, the processing from Step 13221 to Step 13223 for carrying out addition/deletion is repeated for the elements of all the registration/deletion target index information in the renewal of the index information on the work area 124 in the main index reflecting program 132.

First, in Step 13221, if the element of the index information is a registration target, Step 13222 is executed. In this Step 13222, the element of the registration target index information is added to the index information on the work area 124.

On the other hand, in Step 13221, if the element of the index information is a deletion target, Step 13223 is executed. In this Step 13223, the element of the deletion target index information is deleted from the index information on the work area 124.

Next, in Step 13203, as a result of Step 13220, the index information stored in the work area 124 is written into the index information used in Step 13201 which exists in the main index 110 on the secondary storage device 104.

Finally, in Step 13204, the reflection information 310 corresponding to the reflecting index entry types on the type list 111 is rewritten to the information "True" indicating that the information has been written, and then the processing of the main index reflecting program 132 of the present embodiment is finished.

Next, in the index deleting program 136, the index reflecting program 135 shown in PAD of FIG. 7 is executed. However, in the reflection type determination program 130 which is invoked by the index reflecting program 135, the size of the deletion target text data is used as the size of the text data to be registered which is used for the reflecting index entry number.

Next, the index deleting program 136 invokes the index registration program 133 shown in PAD of FIG. 10. However, according to the present embodiment, in the index registration program 133, Step 13301 and Step 13306 shown in PAD of FIG. 10 writes the deletion target text identifier, the registration deletion information indicating that the information is the information added in the deletion processing, and the deletion target text data into the temporary accumulation area 112. The foregoing processing is the processing of the index deleting program 136.

### (Advantageous Effects of the Third Embodiment)

As described above, according to the present embodiment, even when unnecessary data are deleted from the main index 110, the data can be deleted while being divided for each keyword, and thus there is an effect that the data deletion processing speed can be increased.

In the present embodiment, in the processing from Step 13220 to Step 13223 of the main index reflecting program 132 shown in PAD of FIG. 19, registration or deletion is determined by referring to the temporary reflection area 113. However, by adding information as to registration or deletion to the element of the index information when the index information is created in Step 13501 of the index reflecting program 135 shown in FIG. 7, registration or deletion may be determined in Step 13221 of FIG. 19 by judging the additive information of the index information without referring to the temporary reflection area 113.

Furthermore, according to the present embodiment, the deletion target text identifier is necessarily added to the temporary accumulation area 112. However, when the deletion target text identifier already exists in the temporary accumulation area 112, the deletion target text identifier and the deletion target text data are deleted from the temporary accumulation area 112, and thus it is unnecessary to add the deletion target text identifier and the deletion target text data to the temporary accumulation area 112.

Furthermore, when the deletion target text identifier already exists in the temporary reflection area 113, the deletion target text identifier and the deletion target text data may be deleted from the temporary reflection area 113.

In the temporary reflection area 113, there may exist an index entry created from the deletion target text data which have already been written in the main index 110, and thus it is necessary to add the deletion target text identifier and the deletion target text data to the temporary accumulation area 112. When it is found that no index entry corresponding to the deletion target text identifier is written in the main index 110, the deletion target text identifier and the deletion target text data are not required to be added to the temporary accumulation area 112.

### [Fourth Embodiment]

An embodiment in which index information is stored in the type list 111 will be described in detail as a fourth embodiment for carrying out the present invention.

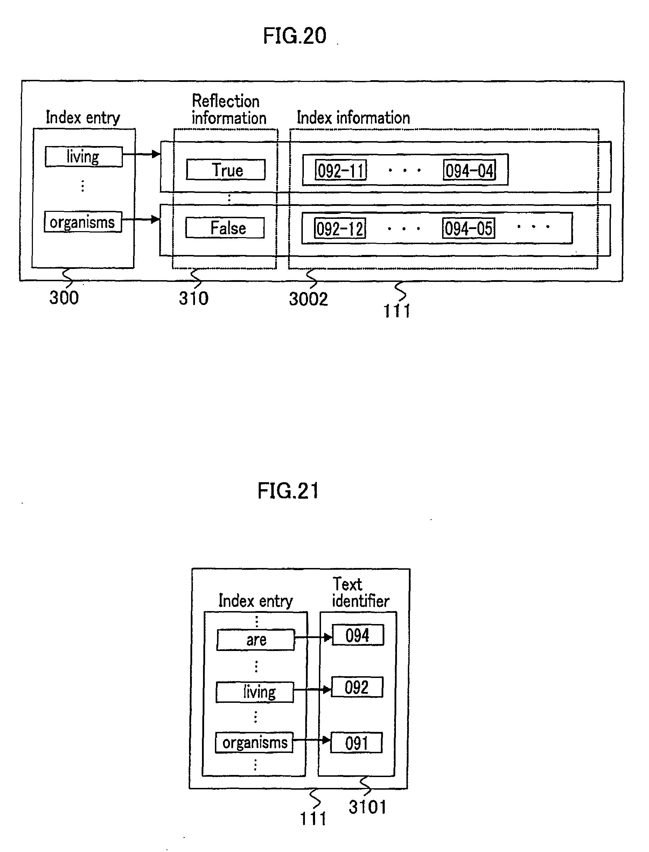

Here, FIG. 20 is a diagram showing the type list 111 of the present embodiment. As shown in FIG. 20, the type list 111 of the present embodiment includes an index entry 300, reflection information 310, and index information 3002. The index entry 300 and the reflection information 310 have the same format as the type list 111 of the first embodiment shown in FIG. 3. The index information 3002 has the same format as the index information 210 used by the main index 110.

Furthermore, in the present embodiment, a part of the processings of the index information creating program 131 and the index registration program 133 is changed.

Other structure is the same as the text retrieval system of the first embodiment, and the description thereof is omitted.

The index information creating program 131 of the present embodiment reads the index information from the type list 111 shown in FIG. 20 and stores it into the work area 124. The index registration program 133 writes the text data into the temporary accumulation area 112, creates the type list 111 when the temporary accumulation area 112 is fully filled, and deletes the content of the temporary accumulation area 112.

In the processing of the index information creating program 131, the element of the index information 3002 corresponding to the index entry 300 of the type list 111 shown in FIG. 20 is stored into the work area 124.

In the processing of the index registration program 133, a processing by which the index information corresponding to the type list created in Step 13304 is created after Step 13304 which is indicated in PAD of FIG. 10 is executed.

### (Advantageous Effects of the Fourth Embodiment)

According to the present embodiment described above, it is unnecessary to create the index information for every text registration processing, and the response when the index is renewed can be enhanced.

In the present embodiment, all the index information is created in the processing of the index registration program 133. However, in the processing of the index registration program 133, only a part of the index information may be created, or no index information may be created, and in the index information creating program 131, only the amount using the values such as the fixed value, the random value, the usable capacity of the work area 124, the writing time of the type list 111, the size of the type list 111, etc., as occasion demands may be created and stored in the type list 111. Furthermore, in the present embodiment, the index information written in the type list 111 is not deleted out of the processing of Step 13304 shown in FIG. 10 of the index registration program 133, however, it may be deleted at any timing after the index information becomes unnecessary in such a case that the size of unnecessary index information exceeds a threshold value or the like.

### [Fifth Embodiment]

An embodiment in which it is managed by using only one temporary accumulation area 1112 without using the temporary reflection area 113 whether the wiring into the main index 110 is carried out for every text identifier will be described in detail as a fifth embodiment for carrying out the present invention.

In the present embodiment, in the text retrieval system of the first embodiment shown in FIG. 1, the temporary reflection area 113 on the secondary storage device 104 is not provided. The data content stored in the element of the reflection information of the type list 111 is changed. Furthermore, a part of the processings of the reflection type determination program 130, the main index reflecting program 132, the index registration program 133 and the index retrieval program 134 is changed.

Other structure is the same as the text retrieval system of the first embodiment, and thus the description thereof is omitted.

Here, FIG. 21 is a diagram showing the type list 111 of the present embodiment. As shown in FIG. 21, the type list 111 of the present embodiment, "True," "False" indicated in the reflection information 310 of the type list 111 of the first embodiment shown in FIG. 3 are replaced by a text identifier 3101 of FIG. 21.

The reflection type determination program 130 of the present embodiment determines the index entry to be written into the main index 110 by using the type list 111 shown in FIG. 21. The main index reflecting program 132 writes the index entry and the index information created by the reflection type determination program 130 and the index information creating program 131 into the main index 110.

Furthermore, the index registration program 133 is invoked by the text registration program 121, and writes the text data into the temporary accumulation area 112. Furthermore, the index retrieval program 134 is invoked by the text retrieval program 122, and retrieves target text data by using the main index 110, the temporary accumulation area 112 and the deletion list 115.

Furthermore, in the present embodiment, in the processing of storing the reflecting index entry types in Step 13003 of the reflection type determination program 130 of the first embodiment shown in PAD of FIG. 8, the index entry corresponding to the text identifier registered early in the text identifiers 3101 on the type list 111 shown in FIG. 21 is preferentially determined to the reflecting index entry types.

In the present embodiment, in Step 13204 of the main index reflecting program 132 of the first embodiment shown in PAD of FIG. 9, the text identifier finally allocated is written into the text identifier 3101 corresponding to the index entry 300 of the type lists 111 shown in FIG. 21 by the time when Step 13204 is executed.

Furthermore, after all the repetitions of Step 13200 are finished, all the text identifiers which are registered before the text identifier which is registered earliest in the reflection information 3101 on the type list 111 and the text data corresponding to these text identifiers are deleted from the text identifiers 400 and the text data 410 on the temporary accumulation area 112 shown in FIG. 4.

Furthermore, in the processing of the index registration program 133, if there is no index entry created from the registration target text in the index entries 300 of the type list 111 shown in FIG. 21, all the index entries created from the registration target text are added. Here, the text identifier finally allocated except for the text identifier allocated to the registration target text is written as the text identifier corresponding to the added index entry. Next, the registration target text is written into the temporary accumulation area 112.

The foregoing processing is the processing of the index registration program 133 according to the present embodiment.

### (Advantageous Effects of the Fifth Embodiment)

According to the present embodiment, it is unnecessary to handle a plurality of temporary areas, and thus it is unnecessary to exchange the contents of the temporary accumulation area 112 and the temporary reflection area 113 according to the present embodiment with each other. Therefore, it is unnecessary to move the contents of the temporary accumulation area 112 and the temporary reflection area 113 in the first embodiment, and thus there is an effect that the management of the temporary areas can be facilitated. Furthermore, the index information is created while being divided during the text registration process, and thus there is an effect that the time and memory required for writing into the index can be reduced.

Furthermore, in the present embodiment, if the maximum number of the types created as index entries is determined, registered texts are written into the main index 110 within the frequency proportional to the maximum number, and thus the type list 111 is prevented from infinitely increasing.

The present embodiment is implemented by using only the temporary accumulation area 112. However, the temporary accumulation area 112 may be divided into a plurality of parts, and two or more temporary areas may be used.

### [Sixth Embodiment]

An embodiment in which the temporary reflection area 113 is not used, but only one temporary accumulation area 112 is used to create index information during registration process into the temporary accumulation area 112 will be described in detail as a sixth embodiment for carrying out the present invention.

In the present embodiment, in the text retrieval system of the first embodiment shown in FIG. 1, the temporary reflection area 113 of the secondary storage device 104 is not provided.

Furthermore, the content of data stored in the element of the reflection information of the type list 111 is changed from "True" "False" indicating the reflection information 310 of the type list 111 of the first embodiment shown in FIG. 3 to the information indicating the size of the index information in the temporary accumulation area 112, and the temporary accumulation area 112 has the same structure as the main index 110 of FIG. 2.

Furthermore, a part of the processings of the reflection type determination program 130, the main index reflecting program 132, the index registration program 133 and the index retrieval program 134 is changed.

Other structure is the same as the text retrieval system of the first embodiment, and thus the description thereof is omitted.

Next, the reflection type determination program 130 of the present embodiment uses the type list 111 to determine the index entry to be written into the main index 110. The main index reflecting program 132 writes into the main index 110 the index entry and the index information created by the reflection type determination program 130 and the index information creating program 131.

Furthermore, the index registration program 133 is invoked by the text registration program 121, and writes the text data into the temporary accumulation area 112. Furthermore, the index retrieval program 134 is invoked by the text retrieval program 122, and retrieves target text data by using the main index 110, the temporary accumulation area 112 and the deletion list 115.

In the present embodiment, in Step 13000 of the reflection type determination program 130 of the first embodiment shown in PAD of FIG. 8, the value of the reflecting index entry number can be set to a fixed value. Furthermore, in the determination of the reflecting index entry types of Step 13003, the index entry whose index information number is highest in the reflection information on the type list 111 is preferentially determined to the reflecting index entry types.

Furthermore, in Step 13204 of the main index reflecting program 132 of the first embodiment shown in PAD of FIG. 9, the index entry and the index information of the temporary accumulation area 112 which correspond to the index entry and the index information written in the main index 110 are deleted, and deleted from the index entries and the reflection information of the type list 111.

Furthermore, in the processing of the index registration program 133, if there is no index entry created from the registration target text data in the index entries of the type list 111, all the index entries created from the registration target text data are added. Here, "0" is set to the reflection information corresponding to the added index entries. Next, the index information creating program 131 is executed, the index information is created from the registration target text data and registered in the temporary accumulation area 112, and the size of the index information added to the reflection information is recorded. The foregoing processing is the processing of the index registration program 133 according to the present embodiment.

### (Advantageous Effects of the Sixth Embodiment)

According to the present embodiment, it is unnecessary to handle a plurality of types of temporary areas. Therefore, it is unnecessary to exchange the contents of the temporary accumulation area 112 and the temporary reflection area 113 with each other in the first embodiment, and thus it is also unnecessary to move the contents of the temporary accumulation area 112 and the temporary reflection area 113 in the first embodiment. Accordingly, there is an effect that the management of the temporary area can be facilitated. Furthermore, the index information is dispersively created during the text registration process, and thus there is an effect that the time and memory required for writing into the index can be reduced.

The present embodiment is implemented by using only the temporary accumulation area 112. However, the temporary accumulation area 112 may be divided into a plurality of areas so that two or more temporary accumulation areas are used.

According to the present invention, the deterioration of the response can be suppressed even in an environment that the index for retrieval is renewed in the single thread/single process.

It is contemplated that numerous modifications may be made to the exemplary embodiments of the invention without departing from the spirit and scope of the embodiments of the present invention as defined in the following claims, as interpreted by the description and drawings.

## Claims

1. A method for renewing an index for use in retrieving a subset of data containing a specified data item from a set of data, in an index renewing system provided with storage space which is allocated to areas including an index storage area for storing the index and a temporary accumulation area for storing registration target data and an identifier for the registration target data, the method comprising the steps, to be performed by an operation unit of the index renewing system, of:
receiving registration target data;
storing the received registration target data and an identifier for the received registration target data into the temporary accumulation area;
creating one or more index entries by extracting a data item matching any of predetermined data items for retrieval from the registration target data stored in the temporary accumulation area, and creating index data associated with each of the created one or more index entries, the index data comprising the identifier for the stored registration target data; and
storing each pair of the created one or more index entries and the associated index data as an index into the index storage area on an index entry by index entry basis.

2. A method for renewing an index for use in retrieving a subset of data containing a specified data item from a set of data, in an index renewing system provided with storage space which is allocated to areas including an index storage area for storing the index and a temporary accumulation area for storing an index entry and index data associated with the index entry, the index entry comprising a data item contained in registration target data which matches any of predetermined data items for retrieval, and the index data comprising an identifier for the registration target data, the method comprising the steps, to be performed by an operation unit of the index renewing system, of:
receiving registration target data;
creating, and storing into the temporary accumulation area, one or more index entries by extracting a data item matching any of predetermined data items for retrieval from the registration target data stored in the temporary accumulation area, and creating index data associated with each of the created one or more index entries, the index data comprising the identifier for the received registration target data; and
copying each pair of the one or more index entries and the associated index data stored in the temporary accumulation area, as an index, into the index storage area on an index entry by index entry basis.

3. The method according to claim 1, wherein the areas to which the storage space of the index renewing system is allocated further include a temporary reflection area for storing registration target data and an identifier for the registration target data,
the method further comprising the steps, to be performed by the operation unit of the index renewing system, of:
determining whether or not storage space ample enough to store the received registration target data and the identifier for the received registration target data is available in the temporary accumulation area;
copying at least one pair of registration target data and an identifier for the registration target data currently stored in the temporary accumulation area to the temporary reflection area if it is determined that the storage space ample enough is not available in the temporary accumulation area, and deleting the at least one pair of the registration target data and the identifier therefor from the temporary accumulation area;
creating one or more index entries by extracting a data item matching any of predetermined data items for retrieval from the registration target data stored in the temporary accumulation area, and creating index data associated with each of the one or more index entries created from the registration target data stored in the temporary reflection area, the index data comprising the identifier for the registration target data stored in the temporary reflection area;
storing each pair of the one or more index entries and the associated index data created from the registration target data and the identifier therefor stored in the temporary reflection area, as an index into the index storage area on an index entry by index entry basis; and
storing the received registration target data and the identifier for the received registration target data into the temporary accumulation area from which the at least one pair of the registration target data and the identifier therefor have been deleted.

4. The method according to claim 3 further comprising the steps, to be performed by the operation unit of the index renewing system, of:
receiving a data item specified for retrieval;
searching the index in the index storage area for every index entry matching the received data item and retrieving index data corresponding to each matching index entry to obtain an identifier contained in the retrieved index data;
searching the registration target data in the temporary reflection area for an item matching the received data item to obtain an identifier for the registration target data containing the matching item;
searching the registration target data in the temporary accumulation area for an item matching the received data item to obtain an identifier for the registration target data containing the matching item; and
outputting the identifiers obtained from the index storage area, the temporary reflection area and the temporary accumulation area, respectively.

5. The method according to claim 4 further comprising the steps, to be performed by the operation unit of the index renewing system, of:
creating one or more index entries by extracting a data item matching any of predetermined data items for retrieval from the registration target data stored in the temporary accumulation area, and creating index data associated with each of the created one or more index entries, the index data comprising an identifier for the registration target data from which each of the created one or more index entries is created; and
storing each pair of the created one or more index entries and the associated index data as an index into the index storage area.

6. The method according to claim 3 further comprising:
receiving deletion target data;
creating one or more deletion target index entries by extracting a data item matching any of predetermined data items for retrieval from the registration target data stored in the temporary accumulation area, and creating deletion target index data associated with each of the created one or more deletion target index entries, the deletion target index data comprising an identifier for the received deletion target data;
deleting the created one or more deletion target index entries and the associated deletion target index data from the index; and
deleting registration target data matching the received deletion target data from the temporary accumulation area and the temporary reflection area.

7. The method according to claim 3, wherein the areas to which the storage space of the index renewing system is allocated further include another or more temporary reflection areas similar to the temporary reflection area.

8. The method according to claim 1 or 7, wherein the areas to which the storage space of the index renewing system is allocated further include another or more temporary accumulation areas similar to the temporary accumulation area.

9. The method according to claim 1 wherein the creating step comprises the sub-step, to be performed by the operation unit of the index renewing system, of:
determining the number of index entries to be created according to the quantity of data stored in the temporary accumulation area.

10. The method according to claim 1 wherein the creating step comprises the sub-step, to be performed by the operation unit of the index renewing system, of recording reflection information indicating whether or not each of the created one or more index entries has already been stored as an index in the index storage area; and
wherein the storing step comprises the sub-steps, to be performed by the operation unit of the index renewing system, of:
making a determination, based upon the reflection information, as to whether each of the created one or more index entries has not been stored in the index storage area; and
if the determination made is such that at least one created index entry has not been stored, storing each pair of the at least one created index entry and the associated index data as an index into the index storage area, and updating the reflection information on the at least one created index entry that has now been stored as the index.

11. A system for renewing an index for use in retrieving a subset of data containing a specified data item from a set of data, comprising:
a storage unit comprising an index storage area for storing the index and a temporary accumulation area for storing registration target data and an identifier for the registration target data, wherein the index comprises one or more index entries and index data associated with the one or more index entries, the one or more index entries comprise at least one data item contained in the registration target data which matches any of predetermined data items for retrieval, and the index data comprising the identifier for the registration target data from which the one or more index entries corresponding to the index data are created; and
an operation unit comprising:
means for receiving registration target data;
means for storing the received registration target data and an identifier for the received registration target data into the temporary accumulation area;
means for creating one or more index entries by extracting a data item matching any of predetermined data items for retrieval from the registration target data stored in the temporary accumulation area, and creating index data associated with each of the created one or more index entries, the index data comprising the identifier for the stored registration target data; and
means for storing each pair of the created one or more index entries and the associated index data as an index into the index storage area on an index entry by index entry basis.

12. A system for renewing an index for use in retrieving a subset of data containing a specified data item from a set of data, comprising:
a storage unit comprising an index storage area for storing the index and a temporary accumulation area for storing an index entry and index data associated with the index entry, the index entry comprising a data item contained in registration target data which matches any of predetermined data items for retrieval, and the index data comprising an identifier for the registration target data; and
an operation unit comprising:
means for receiving registration target data;
means for creating, and storing into the temporary accumulation area, one or more index entries by extracting a data item matching any of predetermined data items for retrieval from the registration target data stored in the temporary accumulation area, and creating index data associated with each of the created one or more index entries, the index data comprising the identifier for the received registration target data; and
means for copying each pair of the one or more index entries and the associated index data stored in the temporary accumulation area, as an index, into the index storage area on an index entry by index entry basis.

13. The system according to claim 11, wherein the storage unit further comprises a temporary reflection area for storing registration target data and an identifier for the registration target data; and
wherein the operation unit further comprises:
means for determining whether or not storage space ample enough to store the received registration target data and the identifier for the received registration target data is available in the temporary accumulation area;
means for copying at least one pair of registration target data and an identifier for the registration target data currently stored in the temporary accumulation area to the temporary reflection area if it is determined that the storage space ample enough is not available in the temporary accumulation area, and deleting the at least one pair of the registration target data and the identifier therefor from the temporary accumulation area;
means for creating one or more index entries by extracting a data item matching any of predetermined data items for retrieval from the registration target data stored in the temporary accumulation area, and creating index data associated with each of the one or more index entries created from the registration target data stored in the temporary reflection area, the index data comprising the identifier for the registration target data stored in the temporary reflection area;
means for storing each pair of the one or more index entries and the associated index data created from the registration target data and the identifier therefor stored in the temporary reflection area, as an index into the index storage area on an index entry by index entry basis; and
means for storing the received registration target data and the identifier for the received registration target data into the temporary accumulation area from which the at least one pair of the registration target data and the identifier therefor have been deleted.

14. The system according to claim 13, wherein the operation unit further comprising:
means for receiving a data item specified for retrieval;
means for searching the index in the index storage area for every index entry matching the received data item and retrieving index data corresponding to each matching index entry to obtain an identifier contained in the retrieved index data;
means for searching the registration target data in the temporary reflection area for an item matching the received data item to obtain an identifier for the registration target data containing the matching item;
means for searching the registration target data in the temporary accumulation area for an item matching the received data item to obtain an identifier for the registration target data containing the matching item; and
means for outputting the identifiers obtained from the index storage area, the temporary reflection area and the temporary accumulation area, respectively.

15. The system according to claim 14, wherein the operation unit further comprises:
means for creating one or more index entries by extracting a data item matching any of predetermined data items for retrieval from the registration target data stored in the temporary reflection area or the temporary accumulation area, and creating index data associated with each of the created one or more index entries, the index data comprising an identifier for the registration target data from which each of the created one or more index entries is created; and
means for storing each pair of the created one or more index entries and the associated index data as an index into the index storage area.

16. The system according to claim 13, wherein the operation unit further comprises:
means for receiving deletion target data;
means for creating one or more deletion target index entries by extracting a data item matching any of the predetermined data items from the received deletion target data, and creating deletion target index data associated with each of the created one or more deletion target index entries, the deletion target index data comprising an identifier for the received deletion target data;
means for deleting the created one or more deletion target index entries and the associated deletion target index data from the index; and
means for deleting registration target data matching the received deletion target data from the temporary accumulation area and the temporary reflection area.

17. The system according to claim 13, wherein the storage unit further comprises another or more temporary reflection areas similar to the temporary reflection area.

18. The system according to claim 11 or 17, wherein the storage unit further comprises another or more temporary accumulation areas similar to the temporary accumulation area.

19. The system according to claim 11, wherein the operation unit further comprises means for determining the number of index entries to be created according to the quantity of data stored in the temporary accumulation area before creating one or more index entries and index data associated with each of the created one or more index entries.

20. The system according to claim 11, wherein the means for creating comprises means for recording reflection information indicating whether or not each of the created one or more index entries has already been stored as an index in the index storage area; and
wherein the means for storing comprises:
means for making a determination, based upon the reflection information, as to whether each of the created one or more index entries has not been stored in the index storage area; and
means for storing, if the determination made is such that at least one created index entry has not been stored, each pair of the at least one created index entry and the associated index data as an index into the index storage area, and updating the reflection information on the at least one created index entry that has now been stored as the index.
